**Europäisches Patentamt**

**European Patent Office**

**Office européen des brevets**

(19)

(11) Veröffentlichungsnummer: **0 229 213**

**A1**

# (12) EUROPÄISCHE PATENTANMELDUNG

(21) Anmeldenummer: **86100611.2**

(22) Anmeldetag: **17.01.86**

(51) Int. Cl.⁴: **A01D 17/10 , B65G 15/52**

(43) Veröffentlichungstag der Anmeldung:
**22.07.87 Patentblatt 87/30**

(84) Benannte Vertragsstaaten:
**AT BE CH DE FR GB IT LI LU NL SE**

(71) Anmelder: **Franz Grimme Landmaschinenfabrik GmbH & Co. KG.**
**Wiesenstrasse 10**
**D-2845 Damme(DE)**

(72) Erfinder: **Welp, Johannes**
**Osterdammer Strasse 9**
**D-2845 Damme(DE)**

(74) Vertreter: **Busse & Busse Patentanwälte**
**Postfach 1226 Grosshandelsring 6**
**D-4500 Osnabrück(DE)**

(54) **Stabförderband für Hackfruchterntemaschinen.**

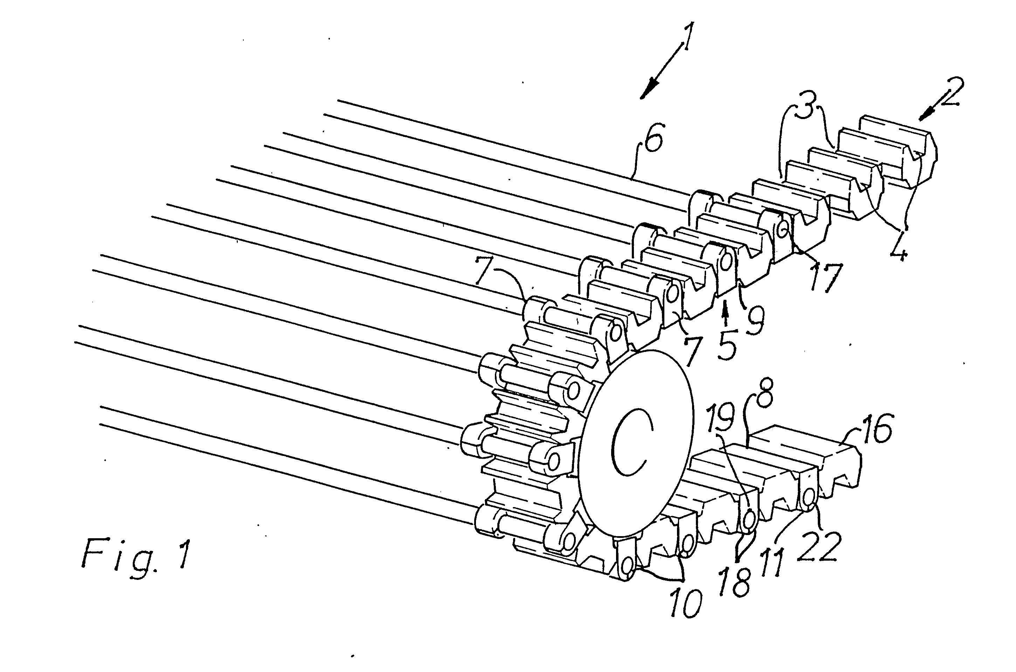

(57) Die Erfindung betrifft ein Stabförderband 1 für Hackfruchterntemaschinen mit zumindest zwei endlosen Riemen 2, die an ihrer Oberseite 3 mit im Abstand parallel zueinander angeordneten Querstäben besetzt sind. Die Enden der Querstäbe 6 sind an den Riemen 2 mittels einer Halterung 5,6 festgelegt. Die Querstäbe 6 sind bei dem erfindugnsgemäßen Stabförderband vernietungs-und verschraubungsfrei an den Riemen dadurch angeordnet, daß als Halterung 5,6 ein im wesentlichen U-förmiger Haltebügel 5 vorgesehen ist, der zumindest einen Teilbereich seines Riemens 2 umgreift, wenigstens einen über die Riemenoberseite 3 vorstehenden Halteschenkel 7 für das Ende eines Querstabes 6 aufweist und am Riemen 2 festgeklemmt ist (Fig. 1).

Fig. 1

**EP 0 229 213 A1**

## Stabförderband für Hackfruchterntemaschinen

Die Erfindung bezieht sich auf ein Stabförderband für Hackfruchterntemaschinen mit zumindest zwei endlosen Riemen, die an ihrer Oberseite mit im Abstand parallel zueinander angeordneten Querstäben besetzt sind, deren Enden mittels je einer Halterung an den Riemen festgelegt sind.

Bei einem bekannten Stabförderband dieser Art besteht die Halterung aus einem Halter mit einem als Ovalrohrstück ausgebildeten Aufnahmeteil für die Stabenden, das nach Einlegen von zwei Stäben in die Endbereiche seiner Ovalöffnung durch einseitiges Zusammendrücken verformt wird und eine Doppelöse mit einem flachen mittleren Doppelsteg bildet. In diesem Doppelsteg sind Querbohrungen und im Riemen Öffnungen angebracht, durch die Niete zur Verbindung des Halters mit dem Riemen gesetzt werden. Nachteilig bei einer derartigen Stabförderbandausführung ist, daß der Riemen durch die notwendigerweise zur Vernietung der Halter vorzusehenden Öffnungen eine unerwünschte Schwächung erfährt. Die Vernietung selbst verursacht darüber hinaus einen erheblichen Arbeits-und somit Fertigungsaufwand. Zudem besteht bei dieser Ausführung die Gefahr, daß sich bei Umlaufen von Umlenkrollen der Halter bereichsweise vom Riemen ablöst, womit ein erheblicher Verschleiß des ohnehin durch die Nietöffnungen ge schwächten Riemens verbunden ist.

Bei einem weiteren bekannten Stabförderband besteht die Halterung der Querstäbe ebenfalls aus mit den Riemen vernieteten Haltern, die jedoch hier die Grundgestalt einer Halbschelle mit einem den jeweiligen Stab oberseitig übergreifenden Aufnahmeteil und einen sich einseitig an diesen anschließenden Flansch haben, wobei der Flansch mit den notwendigen Bohrungen für eine Vernietung mit dem Riemen versehen ist. durch die auch hier notwendigerweise für die Vernietung innerhalb der Riemen vorzusehenden Öffnungen ist demnach auch hier der Riemen geschwächt und mit erheblichem Zeit-und Kostenaufwand mit den Querstäben zu besetzen.

Der Erfindung liegt die Aufgabe zugrunde, ein Stabförderband der im Oberbegriff des Anspruchs 1 angegebenen Art zu schaffen, bei dem die Querstäbe vernietungs-bzw. verschraubungsfrei an den Riemen befestigt sind. Zudem soll das Stabförderband insgesamt mit einem gegenüber den bekannten Ausführungen verringerten Fertigungsaufwand herzustellen sein.

Zur Lösung dieser Aufgabe zeichnet sich das Stabförderband nach der Erfindung dadurch aus, daß als Halterung ein im wesentlichen U-förmiger Haltebügel vorgesehen ist, der zumindest einen Teilbereich seines Riemens umgreift, wenigstens einen über die Riemenoberseite vorstehenden Halteschenkel für das Ende eines Querstabes aufweist und am Riemen festgeklemmt ist. Hinsichtlich weiterer Ausgestaltungen der Erfindung wird auf die Ansprüche 2 bis 11 verwiesen.

Wesentlicher Vorteil des Stabförderbandes nach der Erfindung ist die vernietungs-oder Verschraubungs freie sichere Halterung der Querstäbe an den Riemen. Die Riemen des erfindungsgemäßen Stabförderbandes erfordern in ihrer einfachsten Ausführung keinerlei besondere Gestaltungen, so daß auch heute handelsübliche Riemen Verwendung finden können. Die Haltebügel sind ebenfalls kostengünstig herzustellende Bauteile, die zudem gemeinsam mit den Querstäben mit geringem Montageaufwand an den Riemen anzuordnen sind. Insgesamt ist somit ein Stabförderband zur Verfügung gestellt, das mit verminderten Material-und Montagekosten vernietungsfrei den in der Praxis gestellten Anforderungen gerecht wird.

Es ist zwar schon bekannt (DE-GM 17 55 636), eine vernietungs-und verschraubungsfreie Stabfestlegung durch eine blockförmige, mit Aufnahmeöffnungen für die Stabenden versehene Riemenoberseite vorzunehmen, wobei die Stabenden durch Splinte axial gesichert sind. Durch diese blockförmige Gestaltung der Riemenoberseite sind jedoch die Riemen in unerwünschter Weise erheblich verteuert. Zudem kann die axiale Sicherung der Stabenden nicht befriedigen, so daß im rauhen Alltagsbetrieb einer mit einem solchen Stabförderband ausgerüsteten Hackfruchterntemaschine Funktionsbeeinträchtigungen zu befürchten sind.

Einzelheiten sowie Aufbau und Funktionseigenschaften der Erfindung ergeben sich aus dem in der Zeichnung dargestellten Ausführungsbeispiel, das im folgenden näher erläutert wird. In der Zeichnung zeigen:

Fig. 1 eine perspektivische Teilansicht eines Stabförderbandes im Bereich einer Umlenkrolle;

Fig. 2 eine teilweise geschnittene Draufsicht eines Teilbereichs des erfindungsgemäßen Stabförderbandes;

Fig. 3 eine Darstellung im Längsschnitt entsprechend der Schnittlinie III-III in Fig. 2;

Fig. 4 eine Darstellung im Querschnitt entsprechend der Schnittlinie IV-IV in Fig. 3.

In der Zeichnung sind nur die zum unmittelbaren Verständnis notwendigen Elemente des Stabförderbandes dargestellt und grundsätzlich gleichwirkende Teile mit gleichen Bezugsziffern versehen. Allgemein mit 1 ist das Stabförderband für eine Hackfruchterntemaschine bezeichnet. Dieses Stabförderband besteht aus zumindest zwei endlosen Riemen 2, von denen in dem Ausführungsbeispiel nach Fig. 1 lediglich einer im Bereich seiner Umlenkrolle sichtbar ist, sowie einer Anzahl an der Riemenoberseite 3 mit Abstand zueinander parallel angeordneter Querstäbe 6. Die Riemenoberseite 3 ist zudem mit Profilen 4 versehen, in denen die Stabenden 17 der Querstäbe 6 angeordnet sind.

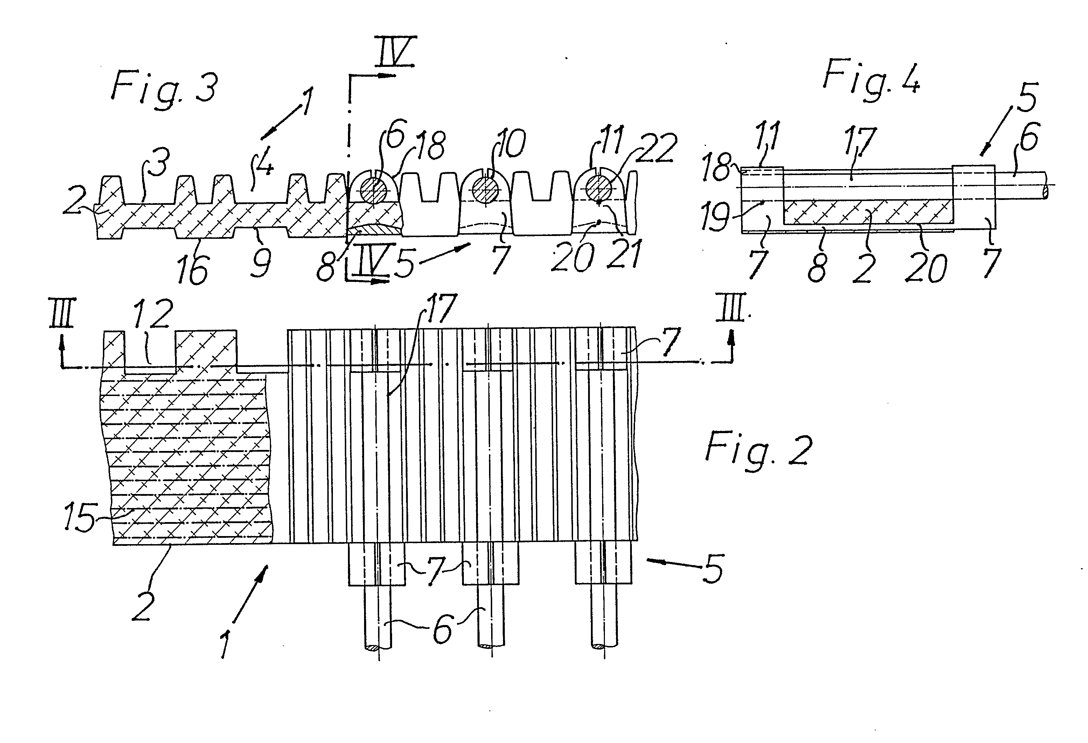

Wie aus den Darstellungen nach den Fig. 1 bis 4 hervorgeht, ist zur Halterung der Querstäbe 6 an den Riemen 2 ein U-förmiger Haltebügel 5 mit seitlichen Halteschenkeln 7 sowie einem Querschenkel 8 vorgesehen. Dieser U-förmige Haltebügel 5 umgreift in dem dargestellten Ausführungsbeispiel einen Teilbereich des Riemens 2, indem er im Riemen 2 zu beiden Seiten vorsehbare Randausnehmungen 12 durchgreift. Die Halteschenkel 7 stehen über die Riemenoberseite 3 vor und weisen in dem vorstehenden Bereich Kettenstabaufnahmeöffnungen 10 auf. Der den Riemen 2 untergreifende Querschenkel 8 des Haltebügels 5 ist jeweils in einer in der Riemenunterseite 16 vorgesehenen Querausnehmung 9 versenkt angeordnet, wobei die geometrischen Abmessungen von Riemendicke und -tiefe der Querausnehmung 9 einerseits und der Abstand von Querschenkeloberseite und Kettenstabaufnahmeöffnug 10 andererseits derart bemessen sind, daß in diesem Bereich der Riemen sowohl an der Unterseite als auch an der Oberseite eine Einschnürung erfährt. Dadurch sind die Querstäbe 6 auch axial gesichert. Die seitlichen Halteschenkel 7 weisen in dem in der Zeichnung dargestellten Ausführungsbeispiel gegenüberliegende, gegenläufig einwärts um die Stabenden 17 jeweils umgebogene Haltelippen 18 auf, die eine Ausnehmung 10 bzw. die Kettenstabaufnahmeöffnung bilden bzw. begrenzen. Dies ist fertigungstechnisch auf einfache Weise mit geringen Kräften zu vollziehen. Analog ist es allerdings auch möglich, jeden Halteschenkel 7 oberseitig abgerundet und als Ringöse 11 in geschlitzter Ausführung zur Aufnahme der Stabenden auszubilden, wobei die geschlitzte Ringöse 11 in einem Fertigungsprozeß mit den Halteschenkeln 7 und dem Querschenkel 8 der Halterung 5 fertiggestellt wird.

` Das Stabförderband 1 ist in dem dargestellten Ausführungsbeispiel in Bereichen außerhalb von Randausnehmungen 12 mit einer Faserverstärkung 15 versehen, die die Zugfestigkeitseigenschaften des Riemens verbessert, so daß dieser mit den Randausnehmungen 12 und der Faserverstärkung 15 versehene Riemen gleiche Zugfestigkeitsanforderungen zu erfüllen vermag wie ein Riemen, der nicht mit Randausnehmungen 12 versehen ist.

## Ansprüche

1. Stabförderband (1) für Hackfruchterntemaschinen, mit zumindest zwei endlosen Riemen (2), die an ihrer Oberseite (3) mit im Abstand parallel zueinander angeordneten Querstäben (6) besetzt sind, deren Enden (17) mittels je einer Halterung - (5,6) an den Riemen (2) festgelegt sind, dadurch gekennzeichnet, daß als Halterung (5,6) ein im wesentlichen U-förmiger Haltebügel (5) vorgesehen ist, der zumindest einen Teilbereich seines Riemens (2) umgreift, wenigstens einen über die Riemenoberseite (3) vorstehenden Halteschenkel (7) für das Ende (17) eines Querstabes aufweist und am Riemen (2) festgeklemmt ist.

2. Stabförderband nach Anspruch 1, dadurch gekennzeichnet, daß der den Riemen (2) untergreifende Querschenkel (8) des Haltebügels (5) in einer Querausnehmung (9) in der Riemenunterseite - (16) versenkt angeordnet ist.

3. Stabförderband nach Anspruch 1 oder 2, dadurch gekennzeichnet, daß der Querschenkel - (8) des Haltebügels (5) an beiden Enden mit einem Halteschenkel (7) versehen ist.

4. Stabförderband nach einem der Ansprüche 1 bis 3, dadurch gekennzeichnet, daß zumindest einer der Halteschenkel (7) eine Randausnehmung (12) des Riemens (2) durchgreift.

5. Stabförderband nach einem der Ansprüche 1 bis 4, dadurch gekennzeichnet, daß in Montageendstellung der Teile (2,5,6,7) der Riemen (2) im Bereich zwischen dem Stabende (17) und dem Querschenkel (8) des Haltebügels (5) eingeschnürt ist.

6. Stabförderband nach einem der Ansprüche 1 bis 5, dadurch gekennzeichnet, daß jeder Halteschenkel (7) seitlich und oberseitig eine von gegenüberliegenden, gegenläufig einwärts um ein Stabende (17) umgebogenen Haltelippen (18) begrenzte Ausnehmung (10) als Stabaufnahme aufweist.

7. Stabförderband nach Anspruch 6, dadurch gekennzeichnet, daß der Abstand zwischen dem tiefsten Punkt (19) der Ausnehmung (10) im Halteschenkel (7) und der Oberseite (20) des Querschenkels (8) des Haltebügels (5) geringer ist als die Ausgangsdicke des Riemens (2) im Montagebereich für den Haltebügel (5).

8. Stabförderband nach einem der Ansprüche 1 bis 5, dadurch gekennzeichnet, daß jeder Halteschenkel (7) oberseitig abgerundet und als Ringöse (11) zur Aufnahme der Stabenden (17) ausgebildet ist.

9. Stabförderband nach Anspruch 8, dadurch gekennzeichnet, daß die Ringöse (11) oberseitig geschlitzt ausgebildet ist und der Abstand zwischen dem tiefsten Punkt (21) der Ringösenaufnahmeöffnung (22) und der Oberseite (20) des Querschenkels (8) des Haltebügels (5) geringer ist als die Ausgangsdicke des Riemens - (2) im Montagebereich für den Haltebügel (5).

10. Stabförderband nach einem der Ansprüche 2 bis 9, dadurch gekennzeichnet, daß der Riemen - (2) an seiner Oberseite (3) in diametraler Anordnung zu den Queraus nehmungen (9) mit Profilen - (4) zur geschützten Anordnung der Stabenden (17) versehen ist.

11. Stabförderband nach einem der Ansprüche 1 bis 10, dadurch gekennzeichnet, daß der Riemen (2) außerhalb seiner Randausnehmungen (12) mit einer Faserverstärkung (15) versehen ist.

Fig. 1

0 229 213

Fig. 3

Fig. 4

Fig. 2

0 229 213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-A-2 421 366 (AVENWEDDER MASCHINEN- UND LANDMASCHINENBAU GmbH) * Seite 2, Zeile 20 - Seite 3, Zeile 19; Seite 4, Zeile 14 - Seite 5, Zeile 2; Ansprüche 1-4; Abbildungen 1-5 * | 1-3,5 | A 01 D 17/10 B 65 G 15/52 |
| Y | | 8 | |
| Y | | 10 | |
| Y | | 11 | |
| A | | 9 | |
| | --- | | |
| Y | EP-A-0 011 512 (TAYLOR MANUFACTURING CO.) * Abbildungen 4-6,11-17; Seite 6, Zeile 29 - Seite 7, Zeile 18; Ansprüche 6,9 * | 8 | |
| A | | 9 | |
| | --- | | |
| Y | FR-A-2 410 949 (F. GRIMME LANDMASCHINENFABRIK) * Abbildung 2; Ansprüche 1,2; Seite 4, Zeilen 2-27 * | 10 | |
| | --- -/- | | |

RECHERCHIERTE SACHGEBIETE (Int. Cl.4)

A 01 D 17/10
B 65 G 15/52
B 65 G 17/44

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | MEINDERS H. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EUROPÄISCHES PATENTAMT

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 520 605 (KLINKICHT) <br> * Seite 3, Zeilen 17-19; Abbildung 3 * <br><br> ----- | 11 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | MEINDERS H. |